Europäisches Patentamt

European Patent Office

Office européen des brevets

(11) Publication number: **0 281 947 B1**

## EUROPEAN PATENT SPECIFICATION

(45) Date of publication of patent specification: **28.07.93**   (51) Int. Cl.⁵: **F16H 59/06, B60K 41/22**

(21) Application number: **88103282.5**

(22) Date of filing: **03.03.88**

(54) **Temperature compensation technique for a continuously variable transmission control system.**

(30) Priority: **13.03.87 US 25392**

(43) Date of publication of application:
**14.09.88 Bulletin 88/37**

(45) Publication of the grant of the patent:
**28.07.93 Bulletin 93/30**

(84) Designated Contracting States:
**DE FR GB IT SE**

(56) References cited:
**EP-A- 0 093 313**
**EP-A- 0 140 228**
**EP-A- 0 198 694**

(73) Proprietor: **Borg-Warner Automotive, Inc.**
**3001 W. Big Beaver Road**
**Troy Michigan 48084(US)**

(72) Inventor: **Petzold, Werner Paul**
**6853 W. Leland Ave.**
**Harwood Heights Ill. 60656(US)**
Inventor: **Umlauf, William Paul**
**200 Forest Drive**
**Schererville, Ind. 46375(US)**

(74) Representative: **Dipl.-Ing. H. Hauck, Dipl.-Ing.**
**E. Graalfs, Dipl.-Ing. W. Wehnert, Dr.-Ing. W.**
**Döring**
**Mozartstrasse 23**
**W-8000 München 2 (DE)**

**Description**

The present invention relates to a method for providing temperature compensation in a continuously variable transmission system according to the preamble of claim 1.

The art contains numerous examples of the operation and construction of continuously variable transmissions (CVT's), e.g., U. S. Patent No. 4,522,086 and U. S. Patent No. 4,458,318, entitled Control System for Continuously Variable Transmission, and Control Arrangement for a Variable Pulley Transmission, respectively. These patents, generally describe the mechanics and controls for a CVT system utilizing two adjustable pulleys, each pulley having at least one sheave which is axially fixed and another sheave which is axially movable relative to the first sheave. A flexible belt of metal or elastomeric material intercouples the pulleys. The interior faces of the pulley sheaves are beveled or chamfered. Thus, as the axially displaceable sheave moves relative to the fixed sheave, the distance between the sheaves and, thus, the effective pulley diameter may be adjusted. The displaceable sheave includes a fluid constraining chamber for receiving fluid to move the sheave and thus change the effective pulley diameter; as fluid is exhausted from the chamber, the pulley diameter changes in the opposite sense. Generally, the effective diameter of one pulley is adjusted in one direction as the effective diameter of the second pulley is varied in the opposite direction, thereby effecting a change in the drive ratio between the input shaft coupled to an input pulley and an output shaft coupled to an output pulley. The ratio changes continuously as the pulley diameters vary. Such transmissions frequently are referred to in the art as a continuously variable transmission, CVT.

Through the years various developments have refined and improved the hydraulic control system which is used to pass fluid into the fluid holding chamber of each adjustable pulley. An example of such a hydraulic system is shown in U. S. Patent 3,115,049 - Moan. In that patent, control of the secondary pulley adjustable sheave regulates the belt tension, while a different circuit regulates fluid into and out of the primary sheave to regulate the transmission ratio. U. S. Patent 4,152,947 - van Deursen et al. - also describes control of a CVT. In both systems, the line pressure of the fluid applied to hold the belt tension by pressurizing the secondary chamber is kept at a relatively high value. An improved control system subsequently was developed to reduce the main line fluid pressures supplied to the secondary sheave chamber as a function of torque demand. This improved system is described and claimed in U. S. Patent 4,522,086 entitled "Control System for Continuously Variable Transmission". Further work resulted in an improved control system which reduced the line pressure applied to the secondary chamber to a lower, safer operating pressure and also provided a lower control pressure for other portions of a hydraulic control system. This system is described in EP-A 104 033 entitled "Hydraulic Control System for a Continuously Variable Transmission".

Another U. S. Patent No. 4,648,496, entitled "Clutch Control System for a Continuously Variable Transmission", further describes control logic techniques for regulating pressure at a clutch in a CVT system to provide the desired torque transfer from an engine to a vehicle drive line. In that system, clutch control focuses on logical recognition of one of a number of operating modes.

CVT systems typically rely upon hydraulic fluid to implement various control functions, such as belt ratio control, line pressure control and clutch control. The viscosity and hence the responsiveness of the hydraulic fluid to flow, however, vary substantially over the range of system operating temperatures which may be expected for a typical application of a continuously variable transmission. Variation in the viscosity of the hydraulic fluid results in an undesirable variation in the system response which creates a negative impact on the system operation, reliability and, ultimately, stability.

Accordingly, a principal object of the present invention lies in providing a temperature compensation technique which generally overcomes the deficiencies of the prior art.

A more specific object of the present invention lies in the provision of temperature compensation for individual fluid actuated controls in continuously variable transmission driven vehicles during expected driving temperatures.

The object is solved by the features of claim 1, which in principle starts from the teaching of EP-A-0 093 313

Generally, the present invention provides a technique for providing temperature compensation in a continuously variable transmission system. In a system having a controller for providing signals to regulate the fluid transfer which accomplishes the belt ratio control, line pressure control, and the clutch control, the present invention envisions an independent determination of the variation in the transfer function associated with each such fluid control over the range of expected system operating temperatures. These variations may be determined empirically, analytically or by model simulation and stored, or the system conceivably may track the variations as they occur. In operation, the system then senses operating temperature and recalls the previously determined expected variation in the responsiveness indicated by the stored or measured variation in the transfer function. The system then adjusts the controller to compensate for the expected variation based on the sensed temperature.

Additional and further objects and advantages of the present invention will become apparent from the following detailed description and accompanying drawings.

The novel features of the present invention are set forth in the appended claims. The invention, together with the objects and advantages thereof, may be understood more fully by reference to the following detailed description taken in conjunction with the accompanying drawings in which like reference numerals are used to indicate like elements and of which:

FIG. 1 is a block diagram representation of a continuously variable transmission driven system;

FIG. 2 is a block diagram representation of a pressure control loop for clutch control in a continuously variable transmission system;

FIG. 3 is a block diagram of physical elements of a clutch control system in a continuously variable transmission system;

FIG. 4 is a Bode plot illustrating magnitude and phase relationships to frequency for a clutch control system such as that of Figure 3 at a selected operating temperature;

FIG. 5 is a Bode plot similar to Figure 4 at a different operating temperature;

FIG. 6 is a flow chart for operation of pressure loop control of clutch pressure in a continuously variable transmission system;

FIG. 7 is an empirical graph of a lead/lag compensation parameter as a function of temperature for use in a clutch pressure loop control for clutch control;

FIG. 8 is an empirical graph of integrator/lead compensation parameter variation as a function of temperature for use in a pressure loop control for clutch control;

FIG. 9 is an empirical graph of a proportional gain parameter as a function of temperature for use in an open loop pressure control for clutch control;

FIG. 10 is a block diagram representation of system elements associated with line pressure regulation in a continuously variable transmission system;

FIG. 11 is a diagram of the physical elements associated with line pressure regulation in a continuously variable transmission system;

FIG. 12 is a linear model block diagram of the physical elements for line pressure regulation, such as those shown in Fig. 11;

FIG. 13 is an empirical graph of the variation in the hydraulic pole location as a function of temperature associated with the line pressure regulation system of Figure 12;

FIG. 14 is a block diagram of a line pressure control system;

FIG. 15 is an empirical graph of the variation of a proportional gain parameter as a function of temperature in a line pressure regulator system such as that of Figure 14;

FIG. 16 is a block diagram of a belt ratio controller for use in a continuously variable transmission system according to the present invention;

FIG. 17 is a linearized model of the belt ratio controller physical control element;

FIG. 18 is an empirical representation of a gain multiplier parameter as a function of temperature for use in the belt ratio controller shown in Figures 16 and 17; and

FIG. 19 is an empirical representation of the variation of the lead/lag pole compensation parameter as a function of temperature in the system of Figures 16 and 17.

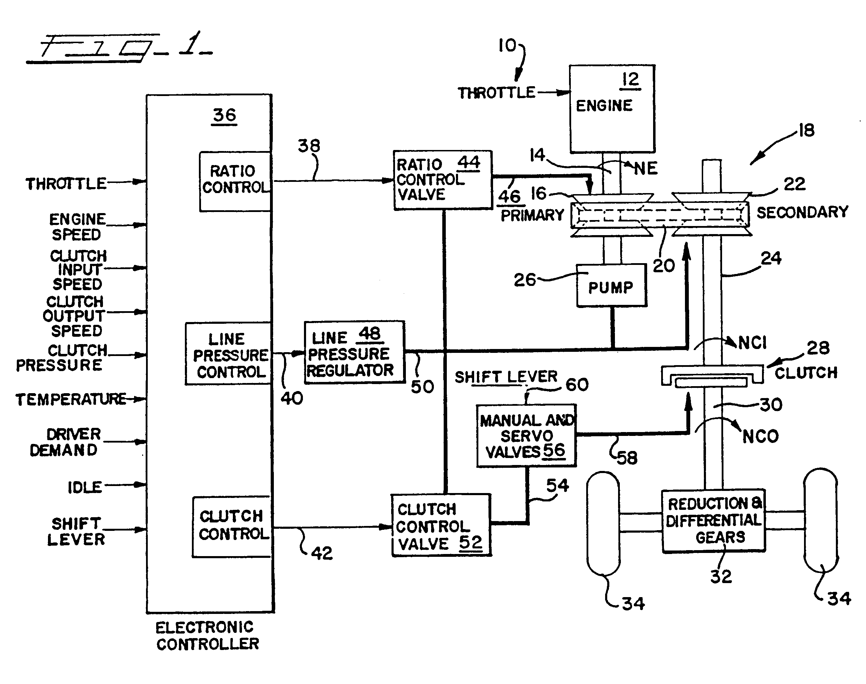

As shown in FIG. 1, a throttle signal 10 controls the operation of an engine 12 which transmits torque via a shaft 14 to a primary pulley 16 in a CVT 18. In a typical embodiment, a flywheel and damping arrangement may be included on the shaft 14 between the engine 12 and the primary pulley 16. A metal or elastomeric belt 20 connects the primary pulley 16 to a secondary pulley 22 to transmit torque to a second shaft 24. A pump 26 may also be driven by the first shaft 14 to provide line pressure for the hydraulic system and the controls of the CVT 18.

The second shaft 24 drives the input to a clutch 28 which in turn provides a torque to a third shaft 30. The third shaft 30 drives a reduction differential gear arrangement 32 as a drive line to provide power to the vehicle wheels 34.

In operation, an electronic controller 36 receives a multiplicity of inputs including throttle, engine speed, clutch input speed, clutch output speed, clutch pressure, temperature, driver demand, idle, shift lever and other information input signals as shown at the left of FIG. 1. The electronic controller 36 operates in a logical fashion to provide a ratio control signal on a line 38, a line pressure control signal on a line 40 and a clutch control signal on a line 42. The signal on the line 38 to a ratio control valve 44 controls the hydraulic pressure on a line 46 to the primary pulley 16 of the CVT 18 to control the ratio between the primary pulley 16 and the secondary pulley 22, i.e., the belt ratio. The signal on the line 40 communicates with a line pressure regulator 48 which via a line 50 provides line pressure from fluid flow delivered by the pump 26 to the ratio control valve 44, a clutch control valve 52 and the secondary pulley 22. The output of the line pressure regulator on the line 50 also controls the pressure at the secondary pulley 22 to ensure that the belt 20 does not slip. The output signal on the line 42 to the clutch control valve 52 controls the output of the clutch control valve 52 on a line 54 to the manual and servo valves 56 which controls the fluid flow on the line 58 to the clutch 28. This is the signal which controls or which provides the pressure at the clutch 28 and hence regulates the torque transfer between the second shaft 24 and the third shaft 30.

A shift lever signal on a line 60 provides an additional control of the manual and servo valves 56. When the shift lever signal on the line 60 indicates that the vehicle is in a neutral or park mode, the manual control within the valve arrangement 56 is closed. This prevents fluid from flowing to the clutch 28 and thus prevents any torque transfer through the clutch 28 when the vehicle is in the neutral or park mode.

A first arrow NE (N = speed; E = engine) on the first shaft 14 indicates one acceptable point of measurement for engine speed. A second arrow NCI (CI = clutch input) on the second shaft 24 indicates an acceptable point of measurement for the clutch input speed. A third arrow NCO (CO = clutch output) indicates an acceptable point of measurement for the clutch output speed, which corresponds to vehicle speed. Those skilled in the art will recognize that the various speed values may be accurately obtained at other locations as desired.

The ratio of NE to NCI will correspond to and provide a measure of the transmission belt ratio. The difference between NCI and NCO correspondingly provides a measure of the slippage at the clutch 28. When NCI equals NCO, the clutch 28 locked-up with no slippage.

The lines 46, 50 and 54 shown in Fig. 1 represent lines for fluid flow in the preferred embodiment. At a minimum, the variation in system fluid viscosity over the range of expected system operating conditions can render unsatisfactory the response of the CVT system. The system then may become unusable in some normal operating conditions, unless the response of the system can be made to compensate for the variations, such as fluid viscosity, which are induced by the temperature variations.

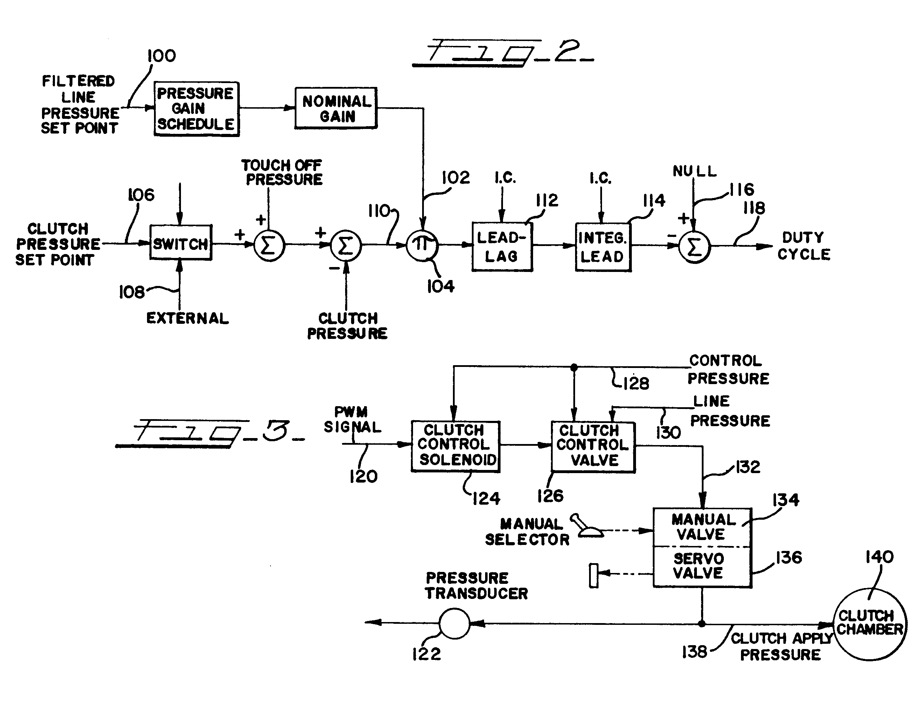

Referring now to Fig. 2 therein is shown a block diagram of a pressure loop control for operation of a clutch in a continuously variable transmission system. The system of Fig. 2 responds to a filtered line pressure setpoint at a line 100 ultimately to provide a proportional gain factor at a line 102 to a multiplying junction 104. The system also responds to the clutch pressure setpoint at a line 106 or an external setpoint at a line 108 to provide a closed loop error signal at a line 110. The system of Fig. 2 then performs a lead/lag function at a block 112 and an integrator/lead function at a block 114 to provide an error signal for subtraction from a nominal null signal at a line 116 to provide an output duty cycle signal at a line 118. The operation of the system of Fig. 2 is explained more thoroughly in the related, co-pending application entitled "Continuously Variable Transmission Clutch Control System," Serial No. 25,391 published on 14/09/88 as EP-A 281 849, and also in related, co-pending application entitled "Special Start Technique For Continuously Variable Transmission Clutch Control," Serial No. 25,476 published on 28/09/88 as EP-A 283 787, both filed on March 13, 1987.

The signal at the line 102 of Fig. 2 represents a proportional gain factor, KAPC, which is a function of line pressure. The signal at the line 118 is a pulse width modulation control signal having a specified duty cycle which is provided to the clutch control valve to create the desired clutch pressure. As explained below, temperature compensation may be introduced into the clutch pressure control system of Fig. 2 through modification of the proportional gain factor KAPC and the function of the lead/lag compensation network 112 and the integrator/lead compensation network 114.

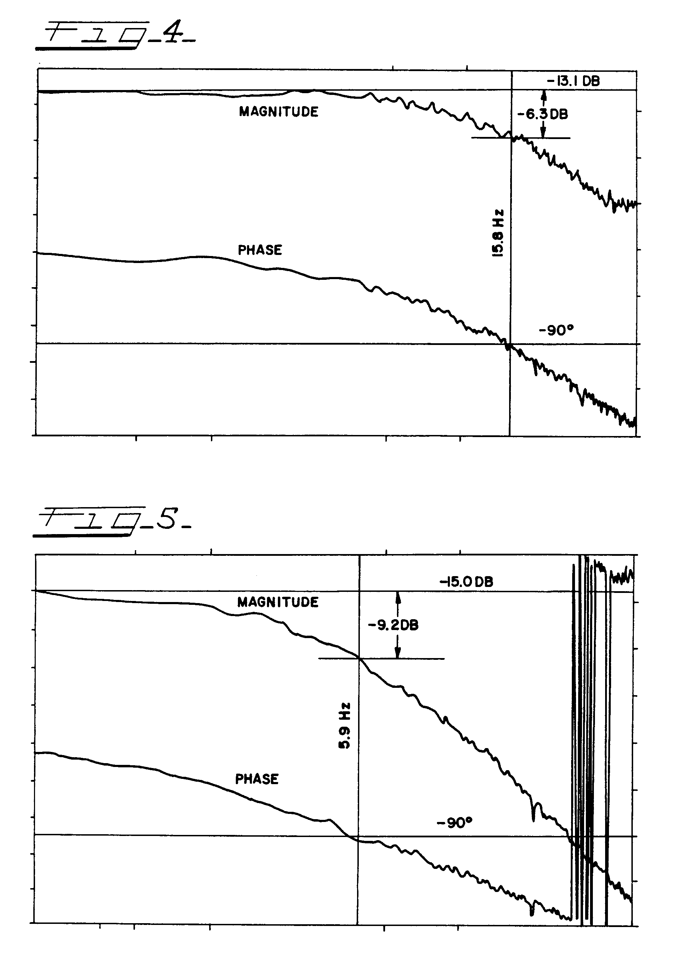

Referring now to Fig. 3, therein is shown a block diagram representation of the valve, clutch and associated hydraulics for the clutch pressure control. This represents a simplified block representation of the physical plant which implements the clutch control system. The pulse width modulation signal is received at a line 120 and the actual clutch pressure is fed back from a pressure transducer 122. A clutch control solenoid 124 operates in conjunction with a clutch control valve 126 in response to control pressure from a line 128 and line pressure from a line 130 to provide fluid flow via a line 132 to the manual and servo valves 134 and 136, respectively. The output of the manual and servo valves 134 and 136 provides a clutch apply pressure at a line 138 to a clutch chamber 140. The operation of this system is described more fully in the co-pending applications and patents referenced above.

Because of the variations in oil viscosity, the response of the valve and associated hydraulics can be expected to be reduced significantly at colder temperatures. At those temperatures, the hydraulic fluid becomes more viscous. Thus, flow through the solenoid valve and the clutch control valve may be reduced undesirably. This reduction of flow relates directly to the reduction in the response of the system.

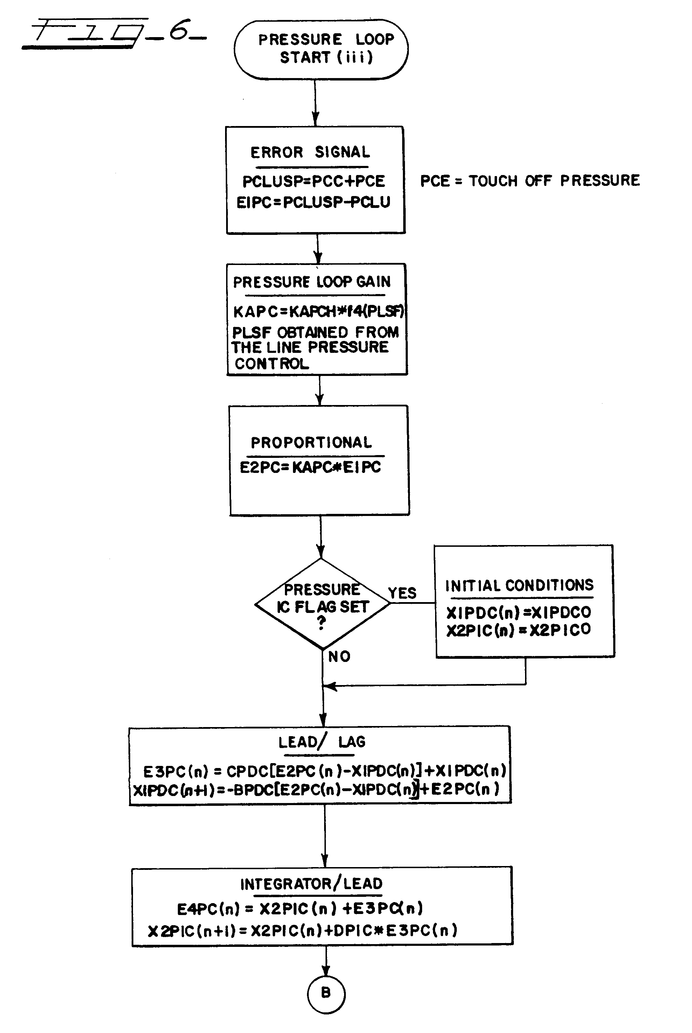

The system operation may be monitored by conventional techniques, such as a frequency analyzer, to provide the Bode plot of Fig. 4. This represents a measurement of magnitude and phase responses as a function of frequency. The plot of Fig. 4 indicates that the system has an effective bandwidth of nearly sixteen hertz and generally represents a two pole system as indicated by the decay of the phase to -180° at the higher frequencies. The plot of Fig. 4 was generated at a line pressure of 200 psig (13,78 bar) and a clutch pressure of 100 psig (6,89 bar). The oil temperature was approximately 71°F ($\approx$ 22°C).

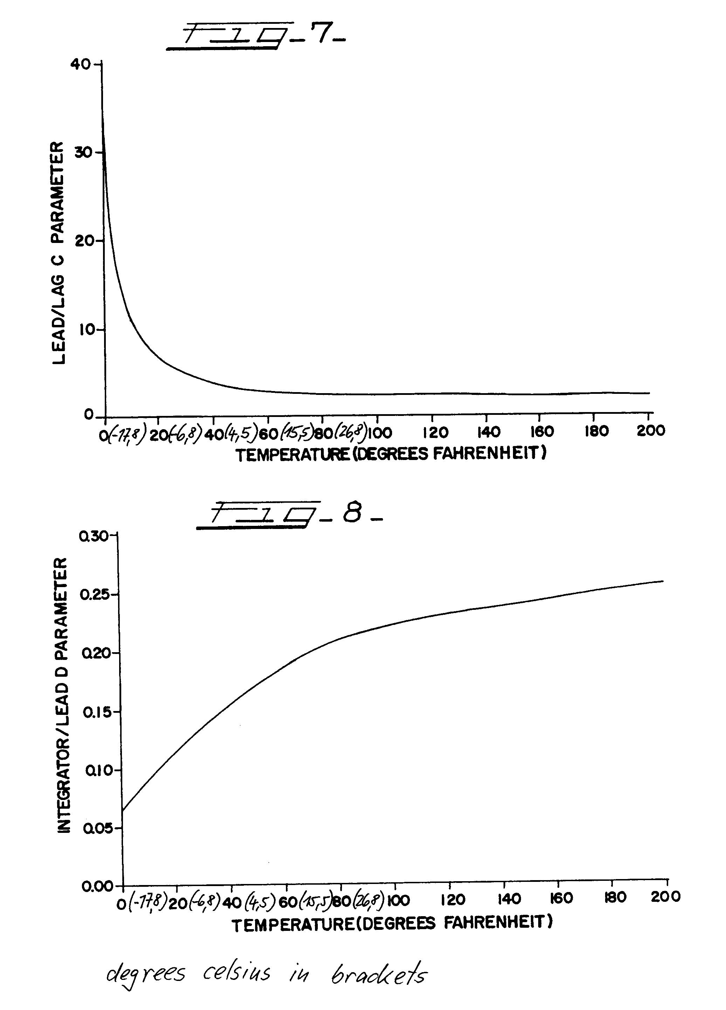

Referring now to Fig. 5, therein is shown a Bode plot for the same system with the same parameters but generated at an oil temperature of approximately 14°F (-10°C). In this plot, it can be seen that the effective bandwidth of the system has diminished to less than four hertz. This was in response to the sole variable change measured by the decrease in temperature from 70°F to 14°F.

As shown by the graphs of Figs. 4 and 5, the response of the control valve and associated hydraulics, which form the clutch pressure control plant as illustrated generally in Fig. 3, can be approximated by a second order transfer function. This transfer function is given generally by the following equation (1):

$$G1(S) \quad = \quad \frac{K}{(\tau_1 S + 1) \ (\tau_2 S + 1)} \tag{1}$$

By performing measurements over a range of temperatures, the time constants $\tau_1$ and $\tau_2$ may be determined as functions of temperature.

Referring again to the block diagram of the system in Fig. 2, the lead/lag compensation network 112 in transfer function form is given by the following formula (2):

$$G2(S) \quad = \quad \frac{\tau_3 S + 1}{\tau_4 S + 1} \tag{2}$$

The integrator lead compensation network 114 may functionally be described by the following formula (3):

$$G3(S) \quad = \quad \frac{1}{\tau_5} \quad \frac{\tau_5 S + 1}{S} \tag{3}$$

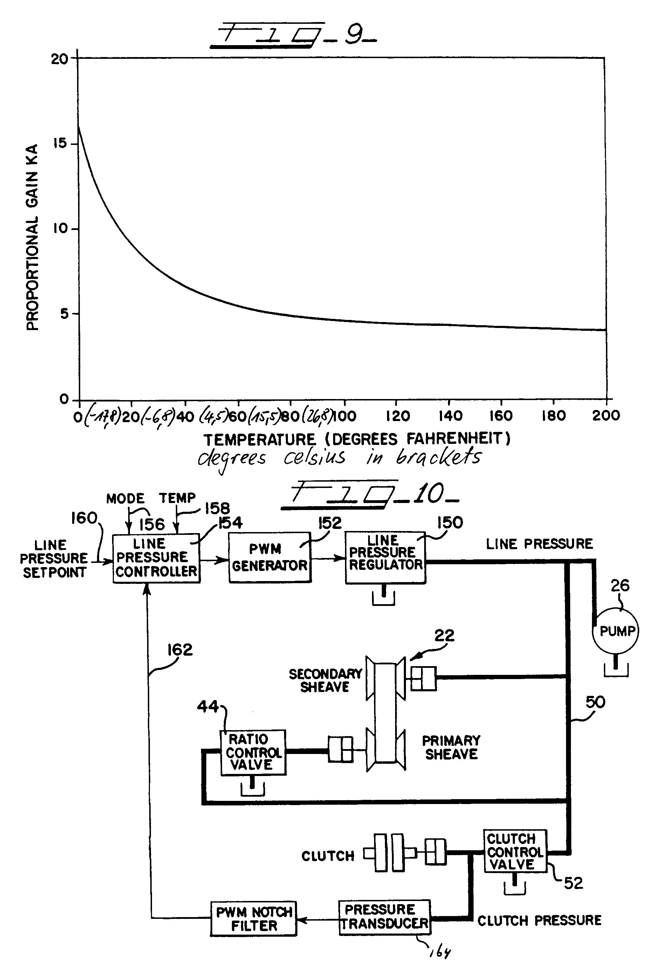

The overall operation of a pressure loop control system may be described generally by the flow chart of Fig. 6, which is described in more detail in the related, co-pending application entitled "Continuously Variable Transmission Clutch Control System," referenced above.

The first pole indicated by the equation (1) may be thought of as representing the hydraulic response variation in the system plant. The second pole may be correspondingly thought of as the variation in the control valve dynamics in the physical plant.

The lead compensation in the controller, embodied in the lead/lag function 112 and the integrator/lead function 114 may be adjusted as the temperature decreases to compensate for the hydraulic and the control valve dynamic poles generally by equation (1). Generally, the lead/lag function 112 may be made to compensate for the hydraulic pole, while the integrator/lead function 114 may be made to compensate for the second, control valve dynamics, pole.

This may be done by adjusting the compensation zeros, given by time constants $\tau_3$ and $\tau_5$ in equations (2) and (3), to track the poles of the plant response, given by time constants $\tau_1$ and $\tau_2$ in equation (1). In this fashion, an approximate cancellation of the poles associated with the plant dynamics may be achieved by modification of the controller compensation zeros.

The time constant $\tau_4$ is not made a function of temperature, but remains constant throughout the operation of the system. As explained in conjunction with the previous applications, this time constant $\tau_4$ may be chosen to have a sufficient value so as not to produce any practical impact on the operation of the system.

The controller proportional gain, KAPC, also must be adjusted as a function of temperature to maintain a constant, open loop gain in the clutch pressure loop. As the integrator/lead pole is pushed out to compensate for temperature variations, a need is created for a correction in the system response. This may be achieved through modification of the proportional gain factor. Accordingly, KAPC increases in the system of the preferred embodiment as the temperature decreases.

Referring again to Fig. 6, it can be seen that the lead/lag compensation network 112 and the integrator/lead compensation network 114 are implemented in the digital controller by means of difference equations. Generally, the operation of the lead/lag compensation network may be implemented by the following equations (4) and (5):

$$E3PC(n) = CPDC(E2PC(n)-X1PDC(n)) + X1PDC(n) \qquad (4)$$
$$X1PDC(n + 1) = -BPDC(E2PC(n)-X1PDC(n)) + E2PC(n) \qquad (5)$$

Generally, the operation of the integrator/lead compensation network 114 may be given by the following equations (6) and (7):

$$E4PC(n) = X2PIC(n) + E3PC(n) \qquad (6)$$
$$X2PIC(n + 1) = X2PIC(n) + DPIC \times E3PC (N) \qquad (7)$$

The parameter BPDC of equation (5) in the lead/lag difference equations determines the time constant $\tau_4$. As mentioned, this remains constant with the temperature.

The lead/lag parameter CPDC of difference equation (4) determines the time constant $\tau_3$, and the integrator/lead parameter DPIC establishes a time constant $\tau_5$. Scheduling the values of these parameters as a function of temperature provides one method for compensating for the variation in the plant response created by variations in the operating temperature.

As mentioned above, a frequency analyzer may be used to obtain a transfer function through cross correlation to provide a Bode plot of magnitude and phase for system operation at the entire range of expected operating temperatures.

The necessary increase in the lead/lag parameter CPDC as temperature decreases and the decrease in the integrator/lead parameter DPIC as temperature decreases may be scheduled as a function of temperature.

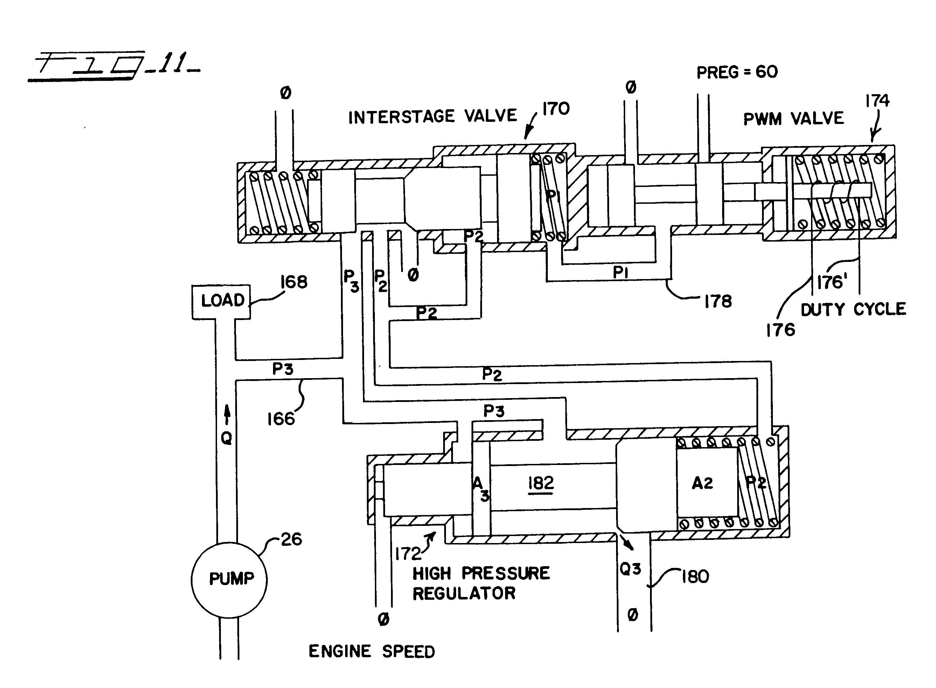

Fig. 7 illustrates a temperature schedule for the lead/lag parameter CPDC. Accordingly, in operation the system senses the operating temperature and retrieves the corresponding CPDC value for use in the lead/lag compensation calculations.

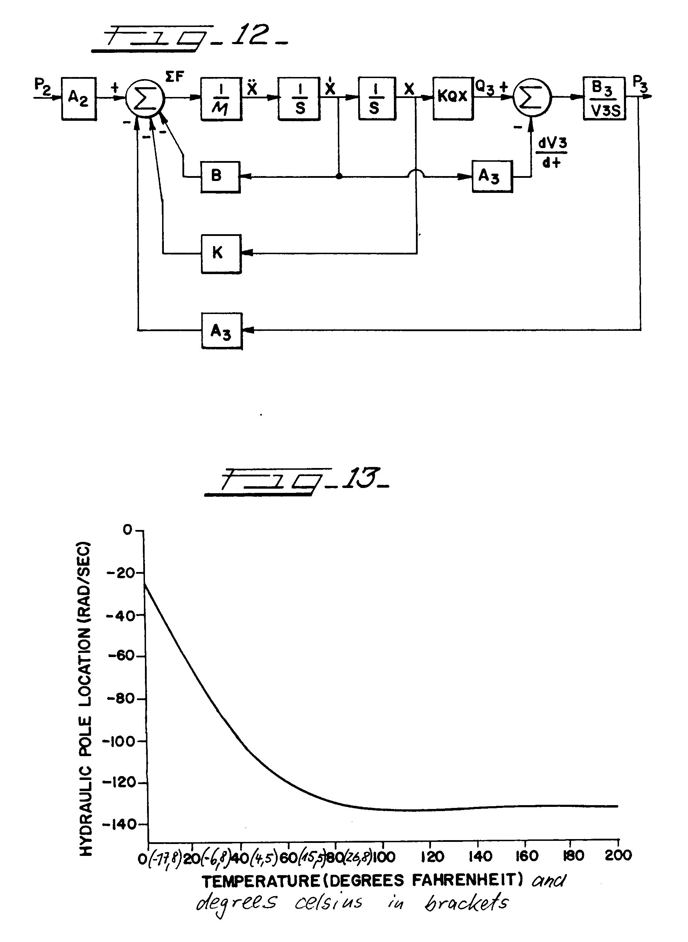

Fig. 8 represents a corresponding temperature schedule for the integrator/lead parameter DPIC. Accordingly, after the system senses the operating temperature, it retrieves the corresponding DPIC value for use in the integrator/lead compensation calculations.

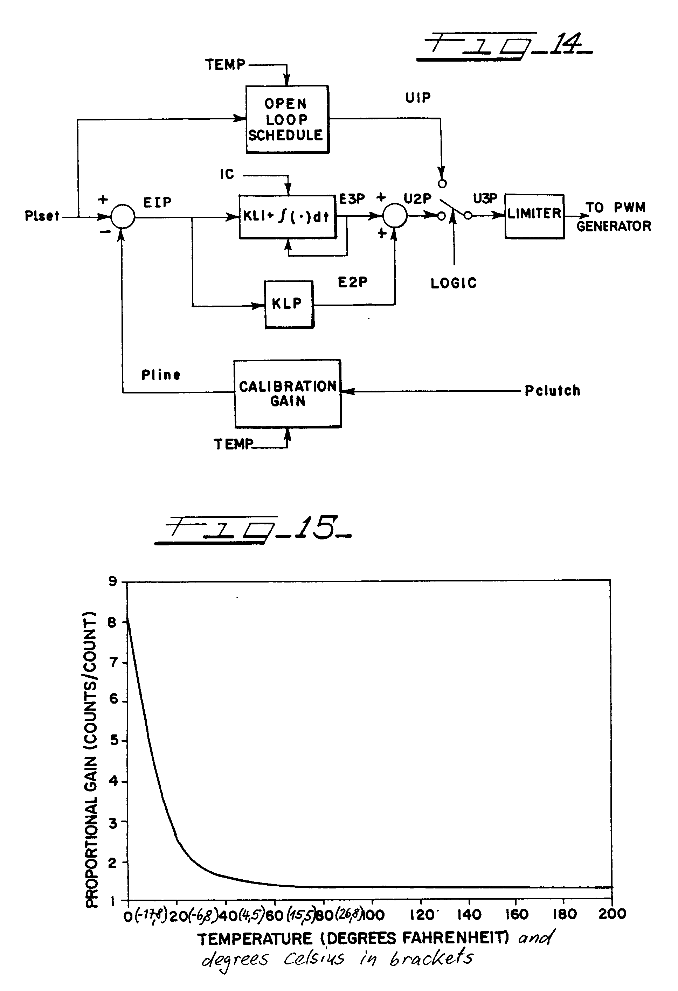

Correspondingly, the necessary increase in the proportional gain factor KAPC may be scheduled as a function of temperature. This is illustrated in the graph of Fig. 9. Thus, after the operating temperature is sensed, the system obtains the proportional gain factor from the illustrated schedule.

It should be appreciated that the schedules illustrated in Figs. 7, 8 and 9 are determined from system measurements for a selected embodiment of a continuously variable transmission system over a chosen set of expected operating temperatures. These values must be viewed as qualitative in terms of the particular embodiment. Modifications and variations in actual quantitative values should be expected for use in actual CVT systems over the expected range of temperature variation.

Generally, the above provides a technique for temperature compensation in a clutch pressure control system. The variations in system response are measured as a function of temperature and an associated approximate transfer function generated. Variations in the poles associated with the transfer function at particular temperatures may then be compensated for through corresponding empirical measurements or analytical determinations and implemented through the lead/lag compensation network 112 and the integrator/lead compensation network 114. The proportional gain factor may also be adjusted to maintain a constant overall system gain for the desired response.

It is not envisioned that temperature compensation is required in the outer engine speed loop, which normally is used in the clutch control system during normal start mode.

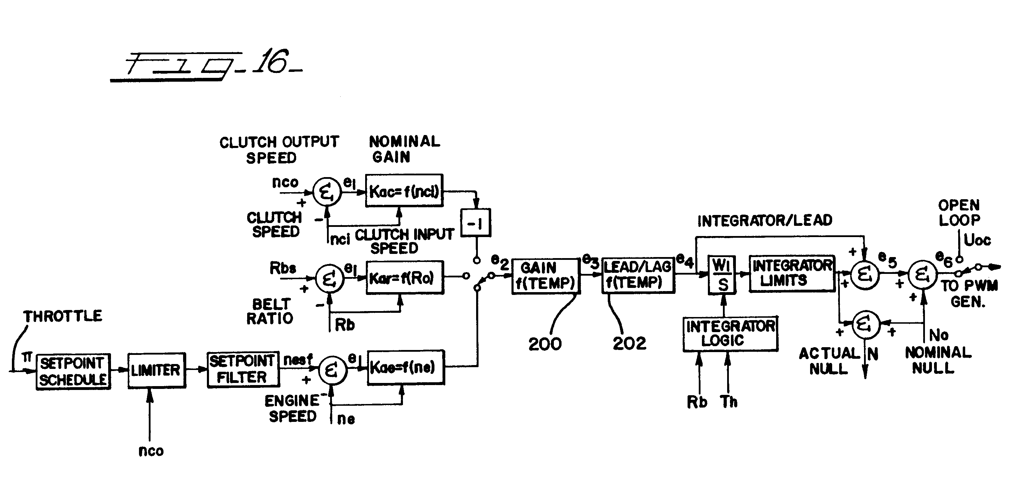

Referring now to Fig. 10, therein is shown a simplified block diagram of the system illustrated in Fig. 1. Specifically, a line pressure regulator 150 receives fluid from a pump 26 and provides a fluid pressure to a secondary sheave 22, a ratio control valve 44 and a clutch control valve 52 for operations explained above. The line pressure regulator 150 is controlled by a pulse width modulation signal from a PWM generator 152. The PWM generator 152 is controlled by a line pressure controller 154, which is a logical subpart of the electronic controller 36 of Fig. 1. The line pressure controller 154 receives mode information from a line 156, temperature information from a line 158, line pressure setpoint information from a line 160 and clutch pressure information from a line 162 by means of a pressure transducer 164 connected to the output of the clutch control valve. For further reference, it should be recognized that the output of the pressure transducer 164 will provide a signal representative of the same pressure as that in the line 50, i.e., line pressure, which connects the line pressure regulator 150 to the ratio control valve 44 in the clutch control valve 52 as long as the clutch is in a full locked-up mode and the clutch control valve is fully open to line pressure.

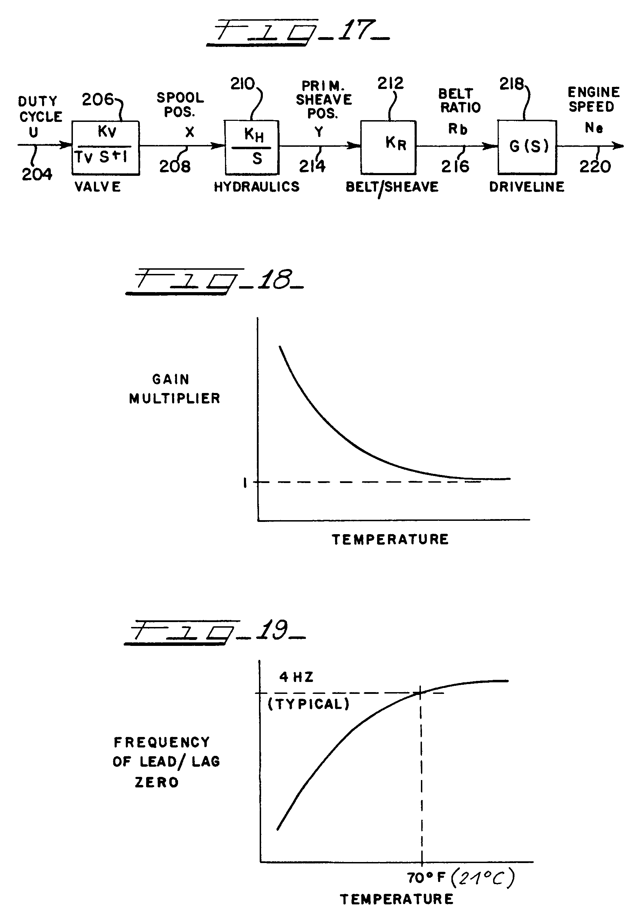

Referring now to Fig. 11, therein is shown a more detailed diagram of the line pressure regulator 150. Generally, the pump 26 provides a fluid flow, Q, at a line 166. A load representative of system flow demands 168 is provided also. The line 166 communicates the line pressure $P_3$ which results from the pump flow minus the load flow and regulator dump flow, $Q_3$, to the interstage valve 170 and to the high pressure regulator 172. A PWM valve 174 receives the pulse width modulation duty cycle signal via the lines 176 and 176'. Generally, the PWM valve 174 supplies fluid in response to the control duty cycle signal via a line 178. This fluid flow, develops pressure $P_1$, which drives the interstage valve 170 to provide a controlled pressure, $P_2$, to the high pressure regulator 172. This pressure, $P_2$, generally drives the high pressure regulator 172 to permit flow from the line 166 to an output line 180 as a regulator dump flow $Q_3$ which is subtracted from the pump and load flow to provide and control line pressure $P_3$. The operation of the physical valves illustrated in Fig. 11 may be more fully understood from the previous, referenced applications, the teachings of which have been incorporated herein by reference.

For purposes of variations with temperature, the interstage valve and the PWM valve 174 are ignored since the main regulator is the source of the slower dynamics. Accordingly, temperature compensation for the line pressure regulation in the system of the present invention focuses upon the high pressure regulator 172. The regulator and associated hydraulics may be approximated by a third order system. The mechanical poles of the regulator spool 182 comprise a second order system, while the hydraulics represent a first order flow-to-pressure relationship.

Fig. 12 represents a linearized model for the high pressure regulator 172 of Fig. 11. The values illustrated in Fig. 11 represent various parameters for the physical system given by the following table:

<u>**TABLE I**</u>

$P_2$     =     Pilot Pressure from Interstage Valve 170

$A_2$     =     $P_2$ Area of High Pressure Regulator Spool 182

M     =     Mass of High Pressure Regulator Spool 182

B     =     Damping Factor

K      =      Spring Constant

$\ddot{x}$      =      Spool 182 Acceleration

$\dot{x}$      =      Spool 182 Velocity

x      =      Spool 182 Displacement

$K_{qx}$      =      Flow Gain = f(T) w $\sqrt{P_3}$

$w$      =      Flow Gradient of Regulator 172

$\beta$      =      Bulk Modulus

$V_3$      =      Nominal Volume of Hydraulic Load 168

$P_3$      =      Line Pressure

$A_3$      =      $P_3$ Area at Regulator Spool 182

$Q_3$      =      Output Flow

f(T)      =      Function of Temperature

The linearized model of the Fig. 12 operates as indicated therein upon the values given by Table I. As can be seen by Table I, the major temperature dependent parameter in the system is the flow gain of the valve given by the term $K_{qx}$. This parameter relates to the physical position of the valve spool 182 to flow. As the temperature of the hydraulic fluid decreases, the resistance of the fluid to flow increases. Thus, the flow gain has an inverse relationship to temperature.

The effect of temperature on the flow gain manifests itself in the location of the hydraulic pole, the first order flow-to-pressure relationship mentioned above, which moves closer to the origin of the "S" plane as the temperature decreases. The second order spring-mass-damper system associated with the mechanical poles of the spool are considered to be virtually unaffected by temperature. Accordingly, temperature compensation for the line pressure regulator will focus on the flow gain factor.

This has been verified by simulated system response over temperature based upon the linearized model of Fig. 12. In this simulation, only the hydraulic pole associated with the flow gain was effected significantly over the entire range of expected operating temperatures.

Accordingly, Fig. 13 represents the hydraulic pole location associated with the flow gain factor as a function of temperature.

Fig. 14 represents a block diagram of a system for line pressure control as generally described more fully in the previous application with the Serial No. 25,391, filed March 13, 1987 published on 14/09/88 as EP-A-281 849. The operation of Fig. 14 may generally be given by the following equation (8):

$$U2P = K_{1p}\ \frac{(S + Wlead)}{S}\ E1P \tag{8}$$

Where

$\omega lead$  =      $K_{1i}/K_{1p}$

$K_{1p}$  =      proportional gain

$K_{1i}$  =      integrator gain

Accordingly, $K_{1i}$ and $K_{1p}$ may be derived to yield the desired response at a particular operating temperature. The proportional term may then be used to adjust $\omega lead$ to cancel approximately the effect of the hydraulic pole. Thus, varying the proportional gain term Kp maintains the desired system response as the temperature varies. The integrator gain, $K_{1i}$ remains constant as a function of temperature.

The graph of Fig. 15 represents a schedule for the proportional gain as a function of temperature. This is then utilized at the K1p block for the closed loop control of Fig. 14. By adjusting $\omega lead$ through

adjustment of proportional gain, the hydraulic pole of the system is tracked as a function of temperature. Also, the open loop gain of the system remains constant throughout the modification of the lead compensation factor. Accordingly, the line pressure regulator may be compensated for variations of temperature as desired in accordance with the present invention.

Referring now to Fig. 16, therein is shown a block diagram for performing a ratio control technique. The operation of the system illustrated in Fig. 16 is described more fully in relating co-pending application entitled, "Ratio Control Technique for Continuously Variable Transmission Systems," Serial No. 25,389 published on 14/09/88 as EP-A 281 850. However, a variable gain function 200 and a lead/lag compensation function 202 have been added to the system of Fig. 16 to provide for desired temperature compensation in accordance with the present invention. Again, the temperature compensation is designed to counteract the loss of response in the hydraulics of the system corresponding to a decrease in temperature.

The ratio controller outputs a pulse width modulated control signal to the ratio control valve. The valve consists of a first stage solenoid valve and a second stage closed center spool valve. The control valve regulates the flow to the primary sheave actuator, where the resultant fluid pressure determining the CVT belt ratio.

The simplified dynamics of the ratio control plant are shown by the block diagram of Fig. 17. The plant consists of the hydraulic response of the ratio control valve and sheave actuator in response to the duty cycle signal from a line 204, the valve characteristics are given at the block 206. The hydraulics function is based on spool position X from a line 208 as given at a block 210. The belt/sheave transfer function at a block 212 is based on the primary sheave position Y at a line 214. The primary sheave function controls the belt ratio at a line 216 which through a drive line system 218 provides the engine speed at a line 220. Accordingly, Fig. 17 represents a linear model of the ratio control plant.

The parameters of the linear model illustrated in Fig. 17 which are most affected by temperature are the valve constant $\tau V$ and the hydraulic gain $K_H$ illustrated at blocks 206 and 210, respectively. As explained above, the decrease in temperature causes a reduction of flow, because of an increase in oil viscosity. The time constant $\tau V$ is inversely proportional to the flow gain of the solenoid valve. The flow gain of the solenoid valve decreases as the temperature decreases. Accordingly, the time constant $\tau V$ increases as the temperature decreases. Conversely, the hydraulic gain factor KH is directly proportional to the flow gain of the second stage spool valve. Accordingly, the hydraulic gain KH decreases as temperature decreases.

To provide for temperature compensation then in the ratio control system, the pole of the lead/lag function 202 remains at a fixed frequency chosen to be sufficient so as not to have a practical impact on the operation of the system. In contrast, the zero of the lead/lag compensation network 202 tracks the control valve time constant $\tau V$. As explained, $\tau V$ increases as the temperature decreases. Accordingly, the zero of the lead lag compensation network 202 shifts to lower frequencies as the temperature decreases.

The gain multiplier network 200 maintains a constant open loop gain while compensating for changes in the hydraulic gain KH. Accordingly, the gain multiplier at block 200 must increase as the temperature decreases.

Frequency response measurements in a conventional fashion for an actual CVT system may be utilized to derive schedules for the temperature compensation parameters discussed above.

The gain multiplier at block 200 may be implemented as a normalized function of temperature. This is shown generally by the graph of Fig. 18, in which the gain multiplier has a unity value at some reference temperature. As the temperature decreases, the gain multiplier increases accordingly to the empirically or analytically determined values necessary to maintain overall system gain.

Fig. 19 generally illustrates the frequency location of the lead/lag compensation network 202 as a function of temperature. At a specific reference temperature, for example 70°F, the lead/lag zero is set to the same frequency as the lead/lag pole. Again, this frequency is chosen to have a sufficient magnitude so as not to have a practical impact upon operation of the system. However, as temperature decreases, lead compensation becomes a significant factor in system operation as the lead/lag zero tracks the valve pole.

Implementation of the lead/lag compensation in a digital controller has been explained above in terms of the difference equations set forth in the clutch control section of this application. Modification of those equations for utilization in the ratio control system of Fig. 16 is deemed to be within the ordinary skill in the art.

It should be appreciated that the present invention has been implemented for clutch control, line pressure control and ratio control in a continuously variable transmission system. Three approaches have been utilized to achieve the desired temperature compensation in these three systems, and each has achieved the same result. Specifically, in the clutch control system, actual system response measurements were utilized to provide the desired schedule for variation of the integrator/lead, lead/lag and proportional gain parameters. In the line pressure regulator, simulation techniques were utilized to provide the corresponding gain schedule as a function of anticipated operating temperature. Finally, in the ratio control valve, analytical techniques were utilized to provide a linearized model which may be operated as taught by the previously discussed techniques to generate the appropriate gain multiplier and lead/lag zero schedules as a function of expected operating temperature. Accordingly, the operation of the present invention is deemed to be equally applicable to any of the three methods to provide the overall compensation technique generally performed by tracking variations in system transfer function based on variations in system operating temperature.

**Claims**

1. A method for providing temperature compensation in a continuously variable transmission system having certain system operating parameters including:
   monitoring system response for variations as the sensed system operating temperature varies; and
   modifying selected ones of the system operating parameters to compensate for said system response variations so as to provide substantially equivalent operation of said continuously variable transmission system at any system operating temperature, comprising
   the step of adjusting the parameters of transfer functions of the regulating means in accordance with the sensed temperature for controlling said continuously variable transmission system.

2. The method of claim 1 comprising the step of storing said variations with temperature in transfer functions respectively associated with a number of system operating parameters.

3. The method of one of claims 1 or 2, wherein said step of adjusting comprises varying a transfer function for line pressure control in response to said sensed temperature in accordance with predetermined line pressure performance characteristics as a function of temperature to maintain said desired operating characteristics.

4. The method of one of claims 1 to 3, wherein said step of adjusting further comprises varying a transfer function for belt ratio control in response to said sensed temperature in accordance with predetermined belt ratio performance characteristics as a function of temperature to maintain said desired operating characteristics.

5. The method of one of claims 1 to 4, wherein said step of adjusting further comprises varying a transfer function for clutch control in response to said sensed temperature in accordance with predetermined clutch performance characteristics as a function of temperature to maintain said desired operating characteristics.

**Patentansprüche**

1. Verfahren zur Temperaturkompensation in einem stufenlos veränderlichen Getriebesystem mit bestimmten Betriebsbedingungen, wobei das Ansprechverhalten des Systems auf Änderungen überwacht wird, wenn sich die gemessene Betriebstemperatur des Systems verändert, und bestimmte Betriebsparameter des Systems modifiziert werden, um Änderungen im Systemansprechverhalten derart zu kompensieren, daß man bei jeder Betriebstemperatur des Systems einen im wesentlichen gleichwertigen Betrieb des stufenlos veränderlichen Getriebesystems erhält,
   mit dem Verfahrensschritt, daß die Parameter der Übertragungsfunktionen der Reguliermittel zum Steuern des stufenlos veränderlichen Getriebesystems gemäß der gemessenen Temperatur eingestellt werden.

2. Verfahren nach Anspruch 1 mit dem Schritt, daß die temperaturabhängigen Änderungen der Übertragungsfunktionen, die jeweils zu einer Anzahl von Betriebsparametern des Systems gehören, gespeichert werden.

3. Verfahren nach Anspruch 1 oder 2, bei dem man für den Verfahrensschritt zum Einstellen eine Übertragungsfunktion für die Kontrolle des Leitungsdruckes abhängig von der gemessenen Temperatur gemäß vorbestimmten Leitungsdruck-Betriebseigenschaften als Funktion der Temperatur verändert, um die gewünschten Betriebseigenschaften zu erhalten.

**4.** Verfahren nach einem der Ansprüche 1 bis 3, bei dem man für den Verfahrensschritt zum Einstellen ferner eine Übertragungsfunktion für die Kontrolle der Riemenübersetzung abhängig von der gemessenen Temperatur gemäß vorbestimmten Betriebseigenschaften der Riemenübersetzung als Funktion der Temperatur verändert, um die gewünschten Betriebseigenschaften zu erhalten.

**5.** Verfahren nach einem der Ansprüche 1 bis 4, bei dem man für den Verfahrensschritt zum Einstellen ferner eine Übertragungsfunktion für die Kupplungsansteuerung abhängig von der gemessenen Temperatur gemäß vorbestimmten Kupplungsbetriebseigenschaften als Funktion der Temperatur verändert, um die gewünschten Betriebseigenschaften zu erhalten.

**Revendications**

**1.** Procédé pour effectuer une compensation de température dans un système de transmission continue de vitesse ayant certains paramètres de fonctionnement, consistant à:
contrôler les variations de réponse du système lorsque la température de fonctionnement détectée du système varie; et
modifier certains paramètres sélectionnés parmi les paramètres de fonctionnement du système pour compenser lesdites variations de réponse du système afin de fournir un fonctionnement sensiblement équivalent dudit système de transmission continue de vitesse à une température de fonctionnement quelconque du système, comprenant:
l'étape consistant à ajuster les paramètres de fonctions de transfert du moyen de régulation, en fonction de la température détectée, pour commander ledit système de transmission continue de vitesse.

**2.** Procédé selon la revendication 1, comprenant l'étape consistant à stocker lesdites variations en fonction de la température dans des fonctions de transfert respectivement associées à un certain nombre de paramètres de fonctionnement du système.

**3.** Procédé selon l'une des revendications 1 ou 2, dans lequel ladite étape d'ajustement consiste à faire varier une fonction de transfert pour la commande de pression de ligne en réponse à ladite température détectée, en conformité avec des caractéristiques prédéterminées concernant le comportement de pression de ligne, en fonction de la température, afin de conserver lesdites caractéristiques de fonctionnement souhaitées.

**4.** Procédé selon l'une des revendications 1 à 3, dans lequel ladite étape d'ajustement comprend en outre la modification d'une fonction de transfert commandant le rapport de courroie en réponse à ladite température détectée, en conformité avec des caractéristiques prédéterminées concernant le rapport de courroie, en fonction de la température, pour conserver lesdites caractéristiques de fonctionnement souhaitées.

**5.** Procédé selon l'une des revendications 1 à 4, dans lequel ladite étape d'ajustement comprend en outre une modification d'une fonction de transfert de la commande d'embrayage en réponse à ladite température détectée, en conformité avec des caractéristiques prédéterminées de comportement d'embrayage en fonction de la température, pour conserver lesdites caractéristiques de fonctionnement souhaitées.

FIG-1

EP 0 281 947 B1

FIG-2

FIG-3

_Fig_-4-

MAGNITUDE

PHASE

−13.1 DB

−6.3 DB

15.8 Hz

−90°

_Fig_-5-

MAGNITUDE

PHASE

−15.0 DB

−9.2 DB

5.9 Hz

−90°

14

EP 0 281 947 B1

*FIG_6_*

```
        ┌─────────────────────┐
        │   PRESSURE  LOOP     │
        │    START (iii)       │
        └─────────────────────┘
                  │
                  ▼
   ┌──────────────────────────────┐
   │        ERROR  SIGNAL          │        PCE = TOUCH OFF PRESSURE
   │   ─────────────────────       │
   │   PCLUSP=PCC+PCE               │
   │   EIPC=PCLUSP-PCLU            │
   └──────────────────────────────┘
                  │
                  ▼
   ┌──────────────────────────────┐
   │     PRESSURE LOOP GAIN        │
   │   ─────────────────────       │
   │   KAPC=KAPCH*f4(PLSF)         │
   │   PLSF OBTAINED FROM          │
   │   THE LINE PRESSURE           │
   │   CONTROL                     │
   └──────────────────────────────┘
                  │
                  ▼
   ┌──────────────────────────────┐
   │       PROPORTIONAL            │
   │   ─────────────────────       │
   │   E2PC= KAPC*EIPC             │
   └──────────────────────────────┘
                  │
                  ▼
              ╱────────╲                    ┌──────────────────────────────┐
            ╱  PRESSURE  ╲    YES            │    INITIAL CONDITIONS         │
           ⟨  IC FLAG SET  ⟩─────────────────│   ─────────────────────       │
            ╲     ?      ╱                   │   XIPDC(n) =XIPDCO            │
              ╲────────╱                     │   X2PIC(n) = X2PICO          │
                  │ NO                       └──────────────────────────────┘
                  │                                        │
                  │◄───────────────────────────────────────┘
                  ▼
   ┌──────────────────────────────────────────────────────┐
   │                    LEAD/ LAG                          │
   │   ──────────────────────────                          │
   │   E3PC(n) = CPDC[E2PC(n)-XIPDC(n)]+XIPDC(n)           │
   │   XIPDC(n+1)=-BPDC[E2PC(n)-XIPDC(n)]+E2PC(n)          │
   └──────────────────────────────────────────────────────┘
                  │
                  ▼
   ┌──────────────────────────────────────────────────────┐
   │                 INTEGRATOR/LEAD                       │
   │   ──────────────────────────                          │
   │   E4PC(n) = X2PIC(n) +E3PC(n)                         │
   │   X2PIC(n+1)= X2PIC(n)+DPIC*E3PC(n)                   │
   └──────────────────────────────────────────────────────┘
                  │
                  ▼
                 ( B )
```

15

Fig-7-

LEAD/LAG C PARAMETER

TEMPERATURE (DEGREES FAHRENHEIT)

Fig-8-

INTEGRATOR/LEAD D PARAMETER

TEMPERATURE(DEGREES FAHRENHEIT)

degrees celsius in brackets

_FIG_-9-

_FIG_-10-

Fig. 11

PWM VALVE

PREG = 60

DUTY CYCLE

INTERSTAGE VALVE

HIGH PRESSURE REGULATOR

ENGINE SPEED

LOAD

PUMP

174

176'

176

178

170

180

172

168

166

182

26

$P_1$

$P_2$

$P_3$

$A_2$

$A_3$

$Q_3$

$Q$

$$\mathcal{F} = \mathcal{I}\mathcal{Q} = 12 -$$

$$\mathcal{F} = \mathcal{I}\mathcal{Q} = 13 -$$

TEMPERATURE (DEGREES FAHRENHEIT) *and*
*degrees celsius in brackets*

19

## FIG_14

TEMP

OPEN
LOOP
SCHEDULE

UIP

IC

$KLI + \int (\cdot) dt$

E3P

Plset

EIP

+

−

+

U2P

+

U3P

LIMITER

TO PWM
GENERATOR

E2P

LOGIC

KLP

Pline

CALIBRATION
GAIN

Pclutch

TEMP

## FIG_15

PROPORTIONAL GAIN (COUNTS/COUNT)

9
8
7
6
5
4
3
2
1

0(-17,8) 20(-6,8) 40(4,5) 60(15,5) 80(26,8) 100   120   140   160   180   200

TEMPERATURE (DEGREES FAHRENHEIT) and
degrees Celsius in brackets

20

FIG-16

## $F I G$_17_

DUTY
CYCLE
U

204

206

| $\dfrac{Kv}{Tv\ S+1}$ |
| --- |

VALVE

SPOOL
POS.

X

208

210

| $\dfrac{K_H}{S}$ |
| --- |

HYDRAULICS

PRIM.
SHEAVE
POS.

Y

214

212

| $K_R$ |
| --- |

BELT/SHEAVE

BELT
RATIO

Rb

216

218

| $G(S)$ |
| --- |

DRIVELINE

ENGINE
SPEED

Ne

220

## $F I G$_18_

GAIN
MULTIPLIER

1

TEMPERATURE

## $F I G$_19_

4 HZ
(TYPICAL)

FREQUENCY
OF LEAD/ LAG
ZERO

70°F (21°C)

TEMPERATURE